# EUROPÄISCHE PATENTSCHRIFT

(11) **EP 2 689 285 B1**
(45) Veröffentlichungstag und Bekanntmachung des Hinweises auf die Patenterteilung: **19.12.2018**
(21) Anmeldenummer: 12712604.3
(22) Anmeldetag: 15.03.2012
(51) Int. Cl.: G02B 27/09, G02B 17/08

(54) **VORRICHTUNG UND VERFAHREN ZUR AUFWEITUNG EINES LASERSTRAHLS**
DEVICE AND METHOD FOR WIDENING A LASER BEAM
DISPOSITIF ET PROCÉDÉ SERVANT À ÉLARGIR UN FAISCEAU LASER

(30) Priorität: 21.03.2011 DE 102011005835
(43) Veröffentlichungstag der Anmeldung: 29.01.2014
(73) Patentinhaber: TRUMPF Laser GmbH, 78713 Schramberg (DE)
(72) Erfinder: WALLMEROTH, Klaus, 78658 Zimmern o.R. (DE); TILLKORN, Christoph, 78667 Villingendorf (DE); ZAWISCHA, Ivo, 79194 Gundelfingen (DE)
(74) Vertreter: Kohler Schmid Möbus Patentanwälte
(86) Internationale Anmeldenummer: PCT/EP2012/054575
(87) Internationale Veröffentlichungsnummer: WO 2012/126804

(56) Entgegenhaltungen:
- JP-A- 7 144 291
- JP-A- 59 154 415
- JP-A- 2001 293 588
- JP-A- 2002 026 395
- US-A- 3 836 256

## Beschreibung

Die vorliegende Erfindung betrifft eine Vorrichtung zur Aufweitung eines Laserstrahls, insbesondere eines UV-Laserstrahls, sowie ein zugehöriges Verfahren zur Aufweitung eines Laserstrahls.

UV-Laser, d.h. Laser, welche Laserstrahlung im UV-Wellenlängenbereich (mit Wellenlängen unterhalb des sichtbaren Wellenlängenbereichs) erzeugen, gewinnen vor allem in der Mikrobearbeitung immer mehr an Bedeutung. Dies steigert die Nachfrage an UV-Lasern hoher und mittlerer Leistung. Die Erzeugung von ultravioletter Laserstrahlung erfolgt häufig durch Frequenzkonversion eines infraroten Laserstrahls in nichtlinearen Kristallen. Diese Frequenzkonversion benötigt einerseits hohe Infrarot-Intensitäten und geringe Strahldivergenz in den nichtlinearen Kristallen, um eine effiziente Konversion vom infraroten Wellenlängenbereich in den ultravioletten Wellenlängenbereich zu ermöglichen, andererseits darf die Intensität - insbesondere die der erzeugten UV-Strahlung - nicht zu hoch werden, um eine Zerstörung des Kristalls oder eine schnelle Degradation seiner optischen Eigenschaften zu vermeiden.

Diese Bedingungen können beispielsweise (aber nicht ausschließlich) bei Ultrakurzpuls-Lasern mit UV-Pulslängen im Bereich von etwa 5 ps und UV-Pulsenergien von mehr als 1 µJ oder bei Pulslängen von etwa 1 ps und UV-Pulsenergien von mehr als 0,2 µJ zu kollimierten oder nahezu kollimierten UV-Laserstrahlen hoher Intensität führen, deren Durchmesser sich über die Ausdehnung des Konversionsaufbaus nicht signifikant vergrößert, d.h. deren Intensität sich über diese Länge nicht deutlich reduziert.

Dauerhafte UV-Bestrahlung mit hoher Intensität führt in transmissiven Optiken (z.B. Linsen oder anderen Optiken aus Quarzglas) und gegebenenfalls auch in deren Antireflexbeschichtungen zu unerwünschten, permanenten Materialveränderungen, welche die Transmissionseigenschaften dieser transmissiven Optiken bis hin zur Unbrauchbarkeit verschlechtern können. Auch Spuren verschiedener Gase (z.B. Kohlenwasserstoff oder Silikonverbindungen) in einer nicht exakt kontrollierten Umgebung der Optiken können durch die UV-Strahlung so verändert werden, dass es zu Abscheidungen auf den Optiken kommt, die ebenfalls nach einer gewissen Zeit zu deren Unbrauchbarkeit führen können. Insbesondere bei sehr hohen Intensitäten der UV-Strahlung kann diese Degradation so schnell vor sich gehen, dass ein wirtschaftlicher Einsatz von transmissiven Optiken für UV-Laserstrahlen nicht mehr möglich ist.

Um auf die oben beschriebene Weise erzeugte, kollimierte UV-Laserstrahlen hoher Intensität für Anwendungen nutzbar zu machen, ist es erforderlich, diese so aufzuweiten, dass deren Intensität über die gewünschte Einsatzdauer nicht zur Schädigung der Folgeoptiken (z.B. Strahlführungs-, Strahlformungs- oder Bearbeitungsoptiken) führt.

Eine solche Aufweitung könnte zwar durch eine große Propagations-Länge des Laserstrahls bis zu den Folgeoptiken erreicht werden, so dass der Laserstrahl von sich aus bereits ausreichend groß würde. Allerdings ist dies im vorliegenden Fall, bei dem der Laserstrahl (nahezu) kollimiert ist, schwierig umzusetzen, da eine sehr große Propagations-Länge benötigt würde und die Baugröße der gesamten aufweitenden Optik limitiert ist.

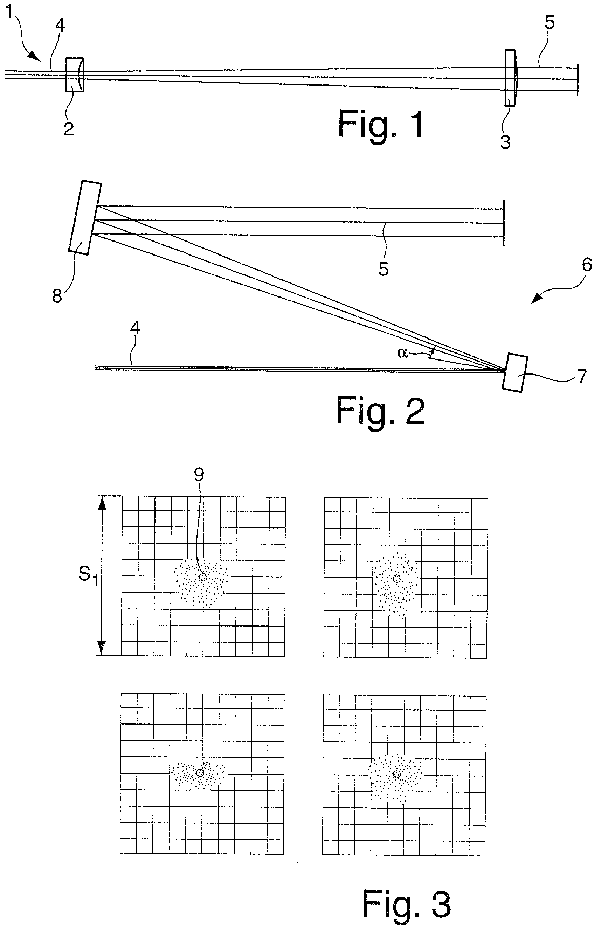

Üblicherweise werden zur Strahlaufweitung von (nahezu kollimierten) Laserstrahlen daher Vorrichtungen zur Strahlaufweitung beispielsweise in Form eines Galilei-Objektives **1** (vgl. **Fig. 1**) genutzt. Ein solches Objektiv 1 weist mindestens zwei Linsen **2**, **3** auf, um einen eintretenden, kollimierten Laserstrahl **4** in einen (hier: 6-fach) aufgeweiteten, ebenfalls kollimierten Laserstrahl **5** umzuwandeln. Das Galilei-Objektiv 1 stellt eine Strahlaufweitungsoptik von einfacher Bauform dar und kann bei kurzer Baulänge und typischer Weise geringem Bauraum unter Verwendung von axial angeordneten, sphärischen Linsen 2, 3 so ausgelegt werden, dass diese zu sehr geringen Strahldeformationen bei hoher Toleranz gegen die Eingangsstrahllage (d.h. Verkippung bzw. Versetzung des Eingangsstrahls) führen. Hinsichtlich der Ausgangsstrahldivergenz können Radienfehler der Linsen 2, 3 oder Fehler in der Eingangsstrahldivergenz durch einfaches axiales Verschieben einer der Linsen 2, 3 kompensiert werden, ohne dass es zu einem lateralem Versatz des aufgeweiteten Laserstrahls 5 kommt.

Ungünstiger Weise ist jedoch die eingangsseitige Linse 2 des Galilei-Objektives 1 selbst einer der hohen UV-Intensität des noch nicht aufgeweiteten Laserstrahls 4 ausgesetzt, so dass es insbesondere bei Verwendung einer dielektrisch antireflexbeschichteten eingangsseitgen Linse 2 zu einer nicht akzeptablen Degradation von deren Transmissionseigenschaften kommen kann. Als Teillösung dieses Problems kann das Galilei-Objektiv 1 mit einer unbeschichteten Eingangsoptik betrieben werden, d.h. ohne Antireflexbeschichtung. Allerdings werden in diesem Fall durch Fresnel-Reflexe an der unbeschichteten Linse 2 Leistungsverluste erzeugt. Auch bleibt das Problem der strahlungsbedingten Veränderung bzw. Degradation des Linsenmaterials selbst bestehen.

Es hat sich herausgestellt, dass die Verschlechterung der Reflektionseigenschaften dielektrischer Spiegel bei intensiver UV-Bestrahlung deutlich geringer ist als die Verschlechterung der Transmissionseigenschaften transmissiver Optiken und insbesondere dielektisch antireflexbeschichteter transmissiver Optiken. Daher können Spiegelobjektive zur Strahlaufweitung von UV-Strahlung deutlich längere Betriebszeiten erreichen als Linsensysteme.

**Fig. 2** zeigt eine Teleskopanordnung 6 mit zwei sphärischen Faltungsspiegeln 7, 8 als reflektierenden optischen Elementen in einer Z-Faltung zur (hier: 6-fachen) Umwandlung eines eintretenden kollimierten Laserstrahls 4 in einen aufgeweiteten kollimierten Laserstrahl 5. Der Abstand zwischen den Faltungsspiegeln 7,8 beträgt hierbei ca. 150 mm, der für beide Faltungsspiegel 7, 8 identische Faltungswinkel 2 α liegt bei ca. 20°.

Ein nicht-axiales Spiegel-System zur Strahlaufweitung wie es beispielhaft in Fig. 2 gezeigt ist hat aber in der Regel diverse Nachteile: Entweder werden asphärische optische Elemente benötigt, um Astigmatismus und Koma zu reduzieren, was diese Systeme teuer und justageempfindlich macht, oder derartige Systeme sind bei gegebener Toleranz der Anwendung gegen Abbildungsfehler auf verhältnismäßig große Spiegelradien und kleine Faltungswinkel beschränkt, wodurch eine große Bauform der Gesamtvorrichtung notwendig wird, und/oder diese Systeme sind auf ganz spezielle Radien- und Faltungswinkelkombinationen und Strahleigenschaften (z.B. konvergenter Ausgangsstrahl (Zwischenfokus)) limitiert.

Für die in Fig. 2 gezeigte Anordnung sind in **Fig. 3** vier durch Simulationen ("Raytracing") erzeugte Spot-Diagramme des Fernfeldes des Spiegel-Teleskops 6 gezeigt. Für den eintretenden Laserstrahl 4 wurde von einer Gauss-förmigen Intensitätsverteilung ausgegangen, bei welcher der 1/e²-Durchmesser (d.h. der Durchmesser, bei dem die Intensität auf das 1/e²-Fache des Maximalwerts gesunken ist) 0,83 mm betrug, d.h. der austretende Laserstrahl 5 sollte im Idealfall bei der hier gezeigten 6-fachen Vergrößerung einen 1/e²-Durchmesser von 5 mm aufweisen. Die Pupille des simulierten Spiegel-Teleskops 6 wurde hierbei so gewählt, dass der errechnete Radius (von ca. 42 µrad) der Airy-Scheibe **9** für eine UV-Wellenlänge von 343 nm ungefähr dem Divergenzwinkel eines Laserstrahls mit Gauss-förmiger Intensitätsverteilung und 1/e²-Durchmesser von 5 mm entspricht.

Neben einem axial ausgerichteten Eingangsstrahl, welcher in Fig. 3 links oben dargestellt ist, wurden jeweils drei weitere Strahlen mit 0,2° Abweichung von der Eingangsachse des Laserstrahls berechnet, welche rechts oben sowie links unten und rechts unten dargestellt sind. Die Skalengröße **S₁** des in Fig. 3 gezeigten (quadratischen) Winkelbereichs liegt hierbei bei 2000 µrad. Da die in Fig. 3 gezeigten Spots im Wesentlichen außerhalb der kreisförmigen Airy-Scheibe 9 liegen, ist das Spiegel-Teleskop 6 für den eintretenden Laserstrahl 4 bei weitem nicht beugungsbegrenzt.

Generell können bei nichtaxialen Spiegelteleskopen wie dem in Fig. 2 gezeigten Spiegelteleskop 6 die Radientoleranzen der Faltungsspiegel 7, 8 oder Fehler in der Kollimation des Eingangsstrahls 4 nicht durch einfache Verschiebung eines einzelnen Faltungsspiegels 7, 8 kompensiert werden, ohne dass es zu einem unerwünschten lateralen Versatz des austretenden Laserstrahls 5 kommt.

Die DE 10 2007 009 318 A1 hat sich ebenfalls mit dem Problem der Aufweitung eines hochenergetischen Laserstrahls beschäftigt. Die dort beschriebene Lösung sieht vor, den Laserstrahl mittels eines transmittierenden oder reflektierenden optischen Elements so aufzuweiten, dass die zuordenbare Energiedichte unterhalb einer kritischen Energiedichte bleibt, um irreversible Schäden an den nachfolgenden optischen Komponenten zu vermeiden. Zur Strahlaufweitung werden in einem Ausführungsbeispiel ein zylindrischer Konvexspiegel, der zum Laserstrahl um 45° geneigt sein kann, und eine konvexe Zylinderlinse verwendet. Durch die Neigung des Konvexspiegels um 45° soll die Energiedichte auf der Spiegeloberfläche um den Faktor Wurzel 2 reduziert werden, so dass der Spiegel selbst keinen Schaden erleidet. Die Zylinder-Linse soll den divergenten aufgeweiteten Laserstrahl in einen Parallelstrahlengang mit vergrößertem Strahlquerschnitt überführen. Dies bietet aber nur die Möglichkeit, den Laserstrahl in einer Richtung aufzuweiten.

Als Alternative zur Aufweitung in zwei Richtungen wird in einem weiteren Ausführungsbeispiel der DE 10 2007 009 318 A1 vorgeschlagen, eine Vorrichtung zur Strahlaufweitung **10** (vgl. **Fig. 4**) mit einem sphärisch konvexen Spiegel 7 zur Strahlaufweitung und zwei mit ihren Zylinderachsen orthogonal zueinander orientierten Zylinderlinsen **11**, **12** zur Umwandlung des an dem konvexen Hohlspiegel 7 divergent aufgeweiteten Laserstrahls in einen austretenden kollimierten Laserstrahl 5, d.h. mit Parallel-Strahlengang, zu verwandeln. Durch die Verwendung der Zylinderlinsen 11, 12 wird die Vorrichtung 10 jedoch sehr justageanfällig, wie nachfolgend anhand von **Fig. 5** und **Fig. 6** dargestellt wird Weiterer Stand der Technik sind JPS59154415 und JPH07144291.

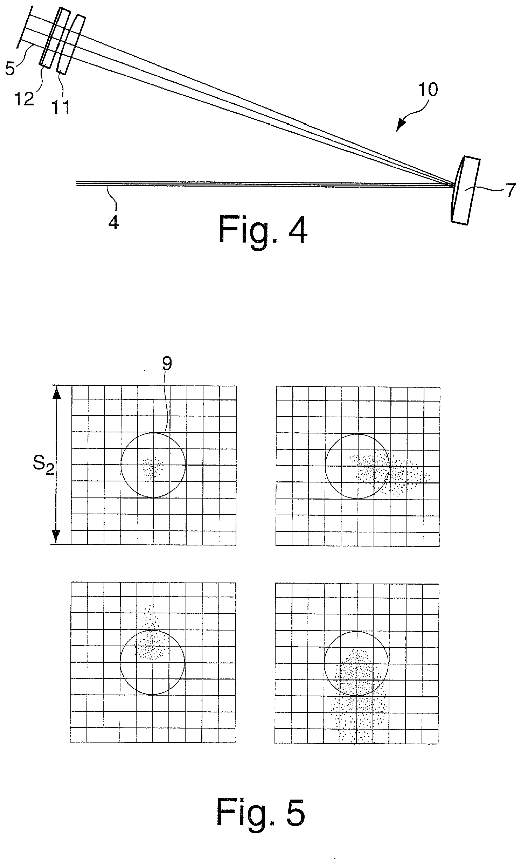

Fig. 5 zeigt eine Darstellung analog Fig. 3, wobei die Eigenschaften des eintretenden Laserstrahls 4 und der Pupille derjenigen von Fig. 3 entsprechen, die Skalengröße S₂ aber kleiner ist und bei 200 µrad liegt..Bei der in Fig. 3 rechts oben dargestellten Spot-Darstellung des Fernfeldes befinden sich alle Strahlen bzw. Spots innerhalb der Airy-Scheibe 9, d.h. der root-mean-square (RMS) Radius der Strahlverteilung ist deutlich kleiner als der Radius (ca. 42 µrad) der Airy-Scheibe 9, so dass die in Fig. 4 gezeigte Optik für den aufgeweiteten Laserstrahl 5 beugungsbegrenzt ist, sofern der Eingangsstrahl axial ausgerichtet ist. Allerdings ergeben sich bei schrägem Strahleinfall leichte Verschlechterungen der Abbildungseigenschaften, wie anhand der Spot-Darstellungen in Fig. 5 links oben, links unten und rechts unten erkennbar ist, bei denen der Feldwinkel des einfallenden Laserstrahls 4 in verschiedene Richtungen um jeweils 0,2° verändert wurde, wobei die Eingangsapertur sich 150 mm vor dem konvexen Spiegel 7 befand.

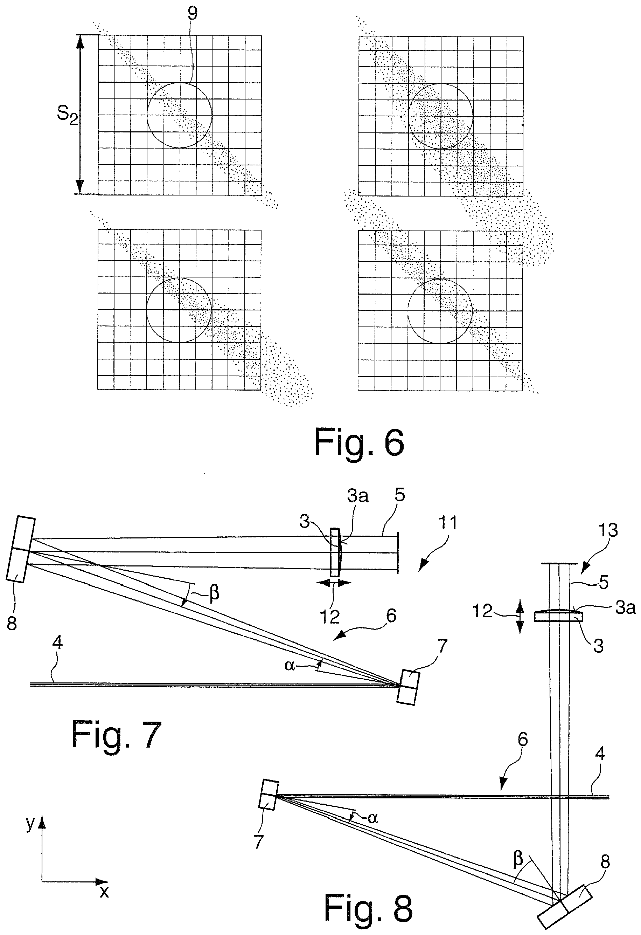

Fig. 6 zeigt eine Darstellung eines Fernfeld-Spot-Diagramms analog zu Fig. 3 und Fig. 5, bei der sowohl die Eigenschaften des einfallenden Laserstrahls 4 als auch die Pupille (und die Skalengröße S₂) wie in Fig. 5 links oben gewählt wurden, aber eine der Zylinderlinsen 11, 12 um jeweils 0,2° um die Strahlrichtung verkippt war. Wie deutlich zu erkennen ist, führt eine geringfügige Dejustage einer jeweiligen Zylinderlinse 11, 12 zu einem starken Astigmatismus unter etwa 45°, der dazu führt, das die Fernfeld-Verteilung nicht beugungsbegrenzt ist, da eine Mehrzahl von Spots außerhalb der Airy-Scheibe 9 (Radius ca. 37 µrad) zu liegen kommen.

### Aufgabe der Erfindung

Es ist die Aufgabe der vorliegenden Erfindung, eine Vorrichtung und ein Verfahren der eingangs genannten Art derart weiterzubilden, dass eine Degradation der verwendeten Optiken durch intensive Laserstrahlung weitestgehend vermieden werden kann, sowie dass bei der Strahlaufweitung nur geringe Abbildungsfehler erzeugt werden.

### Gegenstand der Erfindung

Diese Aufgabe wird erfindungsgemäß gelöst durch eine Vorrichtung zur Aufweitung eines Laserstrahls gemäss Anspruch 1, insbesondere eines UV-Laserstrahls, umfassend: eine Teleskopanordnung mit zwei sphärischen Faltungsspiegeln zur Aufweitung des einfallenden Laserstrahls, sowie eine im divergenten Strahlengang nach der Teleskopanordnung angeordnete Linse mit einer sphärischen Linsenfläche zur Kollimation des aufgeweiteten Laserstrahls, wobei der im Strahlengang erste Faltungsspiegel ein konvex gekrümmter sphärischer Faltungsspiegel ist und wobei der im Strahlengang zweite Faltungsspiegel ein konkav gekrümmter sphärischer Faltungsspiegel ist.

Die Erfinder haben erkannt, dass durch die Verwendung einer Kombination aus zwei sphärischen Spiegeln und einer sphärischen Linse als divergenzkorrigierendem Ausgangselement im bereits aufgeweiteten Laserstrahl Strahlaufweitungen mit sehr kleiner Strahlverformung bzw. Abbildungsfehlern deutlich unter dem Beugungslimit erreicht werden können, wobei die Faltungswinkel an den Faltungsspiegeln über einen verhältnismäßig großen Bereich frei wählbar sind und die Vorrichtung mit einer verhältnismäßig kurzen Bauform realisiert werden kann. Da die Linse im bereits aufgeweiteten Laserstrahl angeordnet und somit einer reduzierten Laser-Intensität ausgesetzt ist, entfällt die Problematik der Degradation der transmissiven Optik, wie sie im Zusammenhang mit dem Galilei-Objektiv von Fig. 1 dargestellt wurde.

Aufgrund der Verwendung von ausschließlich sphärischen Optiken hat die Vorrichtung zur Aufweitung des Laserstrahls eine hohe Toleranz gegenüber Fehlern in der Eingangsstrahllage sowie in der Ausrichtung der einzelnen optischen Elemente (d.h. der Faltungsspiegel bzw. der Linse). Zudem ist die Herstellung von sphärischen Optiken hoher Präzision einfacher und billiger als die Herstellung von Zylinderoptiken oder Linsen mit asphärischen Linsenflächen. Es versteht sich, dass die Linse eine sphärische Linsenfläche (in Kombination mit einer Planfläche) oder auch zwei sphärische Linsenflächen aufweisen kann, d.h. es kann vollständig auf das Vorsehen einer asphärischen Linsenfläche verzichtet werden. Es versteht sich weiterhin, dass die Teleskopanordnung, insbesondere der im Strahlweg zweite Faltungsspiegel, zusätzlich zur Aufweitung bereits einen Teil der Kollimation übernehmen kann, so dass die Brechkraft der Linse, welche den kollimierten Laserstrahl erzeugt, reduziert werden kann.

In einer Ausführungsform umfasst die Vorrichtung eine Verschiebeeinrichtung zur Verschiebung der Linse in Strahlrichtung des kollimierten Laserstrahls. Eventuelle Radienfehler oder ein Kollimationsfehler des Eingangsstrahls können auf diese Weise für die Kollimation des Ausgangsstrahls durch einfaches Verschieben der Ausgangslinse in axialer Richtung kompensiert werden, ohne dass es zu einem seitlichen Strahlversatz kommt oder weitere Optiken neu ausgerichtet werden müssen.

Der im Strahlengang erste, konvex gekrümmte Faltungsspiegel übernimmt hierbei die eigentliche Strahlaufweitung in der Teleskopanordnung. Der im Strahlengang zweite Faltungsspiegel ist ein konkav gekrümmter sphärischer Faltungsspiegel, welcher gemeinsam mit der Linse als konvergierende Optik wirkt. Auf diese Weise wird die benötigte Brechkraft der sammelnden Optiken im (teilweise) aufgeweiteten Strahl auf zwei optische Elemente verteilt. Dies hat den Vorteil, dass geringe Abbildungsfehler entstehen und insbesondere Strahllagefehler oder Optikjustagefehler nur einen geringen Effekt auf die Abbildungseigenschaften haben. Auch kann bei dieser Anordnung ein Großteil der optischen Aberrationen (im wesentlichen Astigmatismus und Koma), die am ersten, konvexen, unter einem Winkel zur Einfallsrichtung des Laserstrahls angeordneten Spiegel entstehen, mit dem zweiten, ebenfalls unter einem Winkel zur Einfallsrichtung des (teilweise) aufgeweiteten Laserstrahls stehenden Faltungsspiegel kompensiert werden.

Bei der Linse handelt es sich typischer Weise um eine Plankonvexlinse, deren konvexe sphärische Linsenfläche der Teleskopanordnung abgewandt ist, so dass die Linse zur Kollimation der Laserstrahlung verwendet werden kann.

Der Krümmungsradius der sphärischen Linsenfläche wird hierbei bevorzugt so auf die Krümmungsradien der Faltungsspiegel abgestimmt, dass sich Aberrationen der Faltungsspiegel und Aberrationen der Linse weitgehend kompensieren und der austretende, kollimierte Laserstrahl die gewünschte Aufweitung aufweist sowie wie gewünscht kollimiert ist. Für eine gewünschte Aufweitung (z.B. um Faktor 1,42; 2; 3; 6; 10; 20; etc.) können zusätzlich zu den Krümmungsradien auch die Abstände zwischen dem ersten Faltungsspiegel, dem zweiten Faltungsspiegel und der Linse sowie die Faltungswinkel geeignet gewählt werden. Bei der erfindungsgemäßen Vorrichtung sind die Anforderungen bezüglich Faltungswinkeln und Baulängen weit geringer als bei vergleichbaren Aufweitungsoptiken mit zwei sphärischen Spiegeln.

In einer Ausführungsform verlaufen eine Strahlrichtung des in die Teleskopanordnung eintretenden Laserstrahls und eine Strahlrichtung des aus der Teleskopanordnung austretenden Laserstrahls parallel zueinander. Bei dieser so genannten Z-Faltung, bei welcher die Faltungswinkel gegenläufig sind, so dass der eintretende und austretende Laserstrahl nahezu parallel zueinander verlaufen und sich nicht überschneiden, können die Faltungswinkel über einen weiten Bereich frei gewählt werden und die Vorrichtung kann mit einer verhältnismäßig kurzen Bauform realisiert werden, wobei Abbildungsfehler besonders gut kompensiert werden können. Es versteht sich, dass die Faltungswinkel an den beiden Faltungsspiegeln hierbei gleich groß gewählt werden können, aber nicht zwingend gleich groß gewählt werden müssen.

In einer alternativen Ausführungsform überschneidet sich der Strahlengang des in die Teleskopanordnung eintretenden Laserstrahls mit dem Strahlengang des aus der Teleskopanordnung austretenden Laserstrahls. Diese auch als X-Faltung bezeichnete Variante, bei welcher zwei gleichsinnige Faltungen verwendet werden, weist bei gleichen Abständen zwischen den optischen Elementen (Spiegeln bzw. Linse) und gleichen Faltungswinkelbeträgen in der Regel geringfügig schlechtere Abbildungs-Eigenschaften als die Z-Faltung auf, ermöglicht aber immer noch eine beugungsbegrenzte Abbildung. Insbesondere kann bei der X-Faltung der Winkel zwischen dem in die Teleskopanordnung eintretenden Laserstrahl und dem aus der Teleskopanordnung austretenden Laserstrahl 90° betragen.

Bei einer Ausführungsform umfasst die Vorrichtung weiterhin: eine Frequenzkonversionseinrichtung zur Frequenzkonversion des Laserstrahls von einer Wellenlänge im IR-Bereich in eine Wellenlänge im UV-Bereich. Die Frequenzkonversionseinrichtung kann zu diesem Zweck z.B. nichtlineare Kristalle aufweisen, welche die Erzeugung eines kollimierten Laserstrahls mit geringem Durchmesser ermöglichen.

Insbesondere kann die Vorrichtung auch einen Laser zur Erzeugung des Laserstrahls aufweisen, der eine Wellenlänge im IR-Bereich aufweisen kann und in diesem Fall typischer Weise mit Hilfe der Frequenzkonversionseinrichtung in einen Laserstrahl mit einer Wellenlänge im UV-Bereich umgewandelt wird. Beispielsweise kann es sich bei dem IR-Laser um einen Nd:YVO₄-Laser handeln, welcher Laserstrahlung mit einer Wellenlänge von 1064 nm erzeugt, so dass dessen dritte Harmonische bei ca. 355 nm und damit im ultravioletten Wellenlängenbereich liegt. Alternativ kann es sich bei dem Laser aber auch um einen Yb:YAG-Laser handeln, der Laserstrahlung mit einer Wellenlänge von 1030 nm erzeugt, so dass die dritte Harmonische bei 343 nm liegt.

Bei einer weiteren Ausführungsform weist die Vorrichtung eine Verkippungseinrichtung zur Verkippung der Linse relativ zur Strahlrichtung des aufgeweiteten, divergenten Laserstrahls auf. Durch die Verkippung der Ausgangslinse relativ zur Strahlrichtung des divergenten Laserstrahls bzw. der (gewünschten) Austrittsrichtung können optische Fehler weiter reduziert werden oder bei gleich bleibenden optischen Fehlern größere Faltungswinkel oder noch kleinere Spiegelradien und damit kleinere Baulängen realisiert werden.

Die Erfindung betrifft auch ein Verfahren zum Aufweiten eines Laserstrahls, insbesondere eines UV-Laserstrahls, mittels einer Teleskopanordnung mit zwei sphärischen Faltungsspiegeln, wobei der im Strahlengang erste Faltungsspiegel ein konvex gekrümmter sphärischer Faltungsspiegel ist und wobei der im Strahlengang zweite Faltungsspiegel ein konkav gekrümmter sphärischer Faltungsspiegel ist, das Verfahren umfassend: Aufweiten eines einfallenden kollimierten Laserstrahls an dem im Strahlengang ersten Faltungsspiegel, sowie Kollimieren des aufgeweiteten Laserstrahls an dem im Strahlengang zweiten Faltungsspiegel und an einer im divergenten Strahlengang nach der Teleskopanordnung angeordneten Linse, welche eine sphärische Linsenfläche aufweist. Die weiter oben im Zusammenhang mit der Vorrichtung beschriebenen Vorteile gelten für das erfindungsgemäße Verfahren entsprechend.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Vorrichtung zur Aufweitung eines Laserstrahls in Form eines Galilei-Teleskops,
- Fig. 2: eine schematische Darstellung einer Vorrichtung zur Aufweitung eines Laserstrahls in Form eines Spiegelteleskops,
- Fig. 3: Darstellungen des Fernfelds des mittels des in Fig. 2 gezeigten Spiegelteleskops erzeugten aufgeweiteten Laserstrahls bei unterschiedlichen Einfallswinkeln des Eintrittsstrahls,
- Fig. 4: eine Darstellung einer Vorrichtung zur Strahlaufweitung mit einem Konvexspiegel und zwei Zylinderlinsen,
- Fig. 5: Darstellungen des Fernfeldes der Vorrichtung von Fig. 4 bei unterschiedlichen Einfallswinkeln des Eintrittstrahls,
- Fig. 6: Darstellungen des Fernfeldes der Vorrichtung von Fig. 4 bei einer Verkippung einer der Zylinderlinsen,
- Fig. 7: eine Darstellung einer Ausführungsform einer erfindungsgemäßen Vorrichtung zur Strahlaufweitung mit einem Spiegelteleskop in einer Z-Faltung und mit einer sphärischen Austrittslinse,
- Fig. 8: eine Darstellung einer weiteren Ausführungsform der erfindungsgemäßen Vorrichtung zur Strahlaufweitung mit einem Spiegelteleskop in einer X-Faltung,

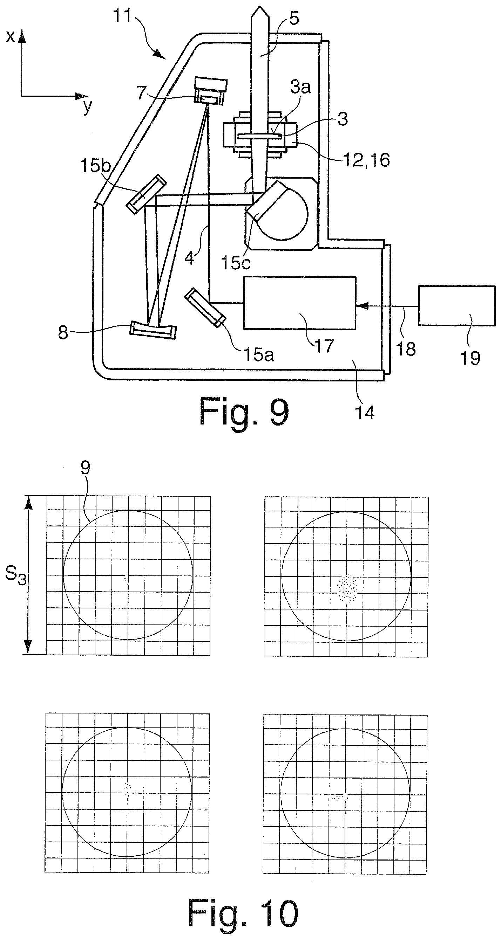

- Fig. 9: eine Darstellung der Vorrichtung von Fig. 7 mit einer Frequenzkonversionseinrichtung und einem IR-Laser, und
- Fig. 10: eine Darstellung des Fernfeldes der Vorrichtung von Fig. 7 bei unterschiedlichen Eintrittswinkeln des Laserstrahls.

**Fig. 7** zeigt eine Vorrichtung **11** zur Strahlaufweitung eines eintretenden, kollimierten Laserstrahls 4, welcher an einem ersten, konvexen Faltungsspiegel 7 einer Teleskopanordnung 6 aufgeweitet und an einem zweiten, konkaven Faltungsspiegel 8 der Teleskopanordnung 6 sowie an einer im divergenten Strahlengang nach dem zweiten Faltungsspiegel 8 angeordneten Linse 3 in einem kollimierten, austretenden Laserstrahl 5 umgewandelt wird, der im vorliegenden Beispiel 6-fach aufgeweitet ist. Die Faltungsspiegel 6, 7 sind sphärische Spiegel, bei der Linse 3 handelt es sich um eine Plankonvexlinse, deren dem zweiten Faltungsspiegel 8 abgewandete Linsenfläche 3a sphärisch gekrümmt ist.

Die in Fig. 7 gezeigte Anordnung der Faltungsspiegel 7, 8 erlaubt eine parallele Ausrichtung des eintrittsseitigen Laserstrahls 4 zum austrittsseitigen Laserstrahl 5 einlang einer gemeinsamen Strahlachse (X-Richtung), die auch als Z-Faltung bezeichnet wird.

Durch die Kombination der zwei sphärischen Faltungsspiegel 7, 8 in oder nahe der Z-Faltungsanordnung mit der sphärischen Linse 3 als divergenzkorrigierendem Ausgangselement im bereits aufgeweiteten, divergenten Strahlengang können bei verhältnismäßig großen, über einen weiten Bereich frei wählbaren Faltungswinkeln 2α, 2β an den beiden Faltungsspiegeln 7, 8 und bei verhältnismäßig kurzer Bauform Strahlaufweitungen mit sehr kleiner Strahlverformung bzw. Abbildungsfehlern deutlich unter dem Beugungslimit erreicht werden. Da die Linse 3 im aufgeweiteten Strahlengang angeordnet ist und daher die Laserstrahlung nur mit reduzierter Intensität auf diese auftrifft, können Schädigungen der Linse 3 vermieden bzw. deutlich reduziert werden, so dass das Linsenmaterial, z.B. Quarzglas, nur unwesentlich durch die Laserstrahlung geschädigt wird.

Um die Vorrichtung 11 geeignet zu dimensionieren, wird in einem ersten Schritt zunächst die benötigte Aufweitung des eintretenden Laserstrahls 4 festgelegt (z.B. 1,42-fach, 2-fach, 3-fach, 6-fach, ..., 10-fach, ..., 20-fach etc.). Liegt die Aufweitung fest (hier: 6-fach), wird ein geeignet dimensionierter Bauraum für die Vorrichtung 11 definiert und eine geeignete Positionierung der Faltungsspiegel 7, 8 im Bauraum gewählt. Hierbei besteht eine vergleichsweise große Freiheit bei der Wahl der Faltungswinkel 2 α, 2 β sowie der Abstände zwischen den optischen Elementen (d.h. zwischen den Faltungsspiegeln 7, 8 und der Linse 3).

Gemeinsam mit den Abständen erfolgt die Bestimmung der sphärischen Krümmung der Faltungsspiegel 7, 8 und der sphärischen Linsenfläche 3a der Linse 3, derart, dass einerseits die gewünschte Aufweitung erreicht wird und sich andererseits die Abberationen der Faltungsspiegel 7, 8 bzw. die Aberrationen der Faltungsspiegel 7, 8 und der Linse 3 weitgehend kompensieren, sowie der austretende Laserstrahl 5 wie gewünscht kollimiert ist. Der Faltungswinkel 2 α (hier: ca. 20°) am ersten Faltungsspiegel 7 und der Faltungswinkel 2 β (hier: ca. 20°) am zweiten Faltungsspiegel 8 können, aber müssen hierbei nicht gleich gewählt werden. Der Abstand zwischen den Faltungsspiegeln 7, 8 beträgt im vorliegenden Fall ca. 150 mm, es versteht sich aber, dass dieser auch größer oder kleiner gewählt werden kann.

Eine Verschiebeeinrichtung **12**, z.B. in Form eines (Linear-)motors, welche ein axiales Verschieben der Linse 3 in Strahlrichtung (X-Richtung) ermöglicht, um die Divergenz des austretenden Laserstrahls 5 einzustellen, ohne dass es zu einem seitlichen Strahlversatz kommt oder eine Korrektur mittels weiterer optischer Elemente erforderlich ist, ist in Fig. 7 durch einen Doppelpfeil angedeutet.

Alternativ zur in Fig. 7 gezeigten Vorrichtung 11, bei der die Faltungsspiegel 7, 8 in einer Z-Faltung angeordnet sind, ist es auch möglich, die Faltungsspiegel 7, 8 in einer so genannten X-Faltung anzuordnen, in welcher der einfallende Laserstrahl 4 in einer ersten Strahlrichtung (X-Richtung) und der ausfallende Laserstrahl 5 in einer zweiten Strahlrichtung (Y-Richtung) verlaufen, wobei die beiden Laserstrahlen 4, 5 sich überschneiden, vgl. die in **Fig. 8** gezeigte Vorrichtung **13**, bei welcher der einfallende und ausfallende Laserstrahl 4, 5 einen Winkel von 90° zueinander einschließen. Der Faltungswinkel 2 α (hier: ca. 20°) am ersten Faltungsspiegel 7 und der Faltungswinkel 2 β (hier: ca. 70°) am zweiten Faltungsspiegel 8 sind hierbei unterschiedlich gewählt. Die Faltungsspiegel 7, 8 bestehen an ihrer Oberfläche aus einem für UV-Laserstrahlung hoch reflektierenden Material, z.B. aus dielektrischen Schichtsystemen auf Quarzglas. Es versteht sich, dass auch andere Materialkombinationen mit guten UV-Reflexionseigenschaften und hoher UV-Beständigkeit verwendet werden können.

**Fig. 9** zeigt die Vorrichtung 11 von Fig. 7 auf einem den Bauraum definierendes optisches Modul **14.** Auf dem optischen Modul 14 sind neben den in Fig. 7 beschriebenen optischen Elementen, d.h. der Linse 3 sowie den beiden in einer Z-Faltung angeordneten Faltungsspiegeln 7, 8 drei weitere plane Faltungsspiegel **15a** bis **15c** angebracht, um den vorhandenen Bauraum optimal auszunutzen. Zusätzlich zur Verschiebeeinrichtung 12 zur Verschiebung der Linse 3 in Strahlrichtung (X-Richtung) kann auch eine in Fig. 9 angedeutete Verkippungseinrichtung **16** an der Linse 3 angebracht werden, um diese gegenüber der X-Richtung bzw. gegenüber dem divergenten Laserstrahl zu verkippen. Durch die Verkippung unter einem geeigneten Winkel können die optischen Fehler noch weiter reduziert werden und/oder größere Faltungswinkel an den Faltungsspiegeln 7, 8, kleinere Krümmungsradien der Faltungsspiegel 7, 8 bzw. kleinere Baulängen realisiert werden. Es versteht sich aber, dass eine Verkippung der Linse 3 nicht zwingend notwendig ist und auch ohne eine Verkippung eine beugungsbegrenzte Abbildung erreicht werden kann.

Die Krümmungsradien der Faltungsspiegel 7, 8 sowie der sphärischen Linsenfläche 3a liegen bei einer ca. 3-fachen bis ca. 6-fachen Aufweitung typischer Weise bei ca. 100 - 300 mm für den ersten Faltungsspiegel 7, bei ca. 1000 -2000 mm für den zweiten Faltungsspiegel 8, bzw. bei ca. 200 - 400 mm für die Linse 3, um die erforderliche Brechkraft für die Aufweitung zu erreichen. Der Abstand zwischen dem zweiten Faltungsspiegel 8 und der Linse 3 kann hierbei beispielsweise im Bereich zwischen ca. 100 mm und 150 mm liegen. Es versteht sich, dass von den oben angegebenen Wertebereichen abgewichen werden kann, insbesondere wenn eine Aufweitung erfolgen soll, die außerhalb des angegebenen Bereichs (3-fach bis 6-fach) liegt.

In Fig. 9 ebenfalls erkennbar ist eine auf dem Modul 14 angeordnete Frequenzkonversionseinrichtung **17** zur Frequenzkonversion eines eingestrahlten Laserstrahls **18**, dessen Wellenlänge im infraroten Spektralbereich liegt, in eine Wellenlänge im ultravioletten Spektralbereich. Die Frequenzkonversionseinrichtung 17 weist nichtlineare Kristalle auf, um die Frequenzkonversion auf eine dem Fachmann geläufige Weise zu erreichen. In Fig. 9 ebenfalls gezeigt ist ein Infrarot-Laser **19**, im vorliegenden Beispiel in Form eines Yb:YAG-Lasers, der IR-Laserstrahlung mit einer Wellenlänge von 1030 nm erzeugt, welche in der Frequenzkonversionseinrichtung 17 in einen UV-Laserstrahl mit hoher Strahlungsintensität und einer Wellenlänge von ca. 343 nm umgewandelt wird. Es versteht sich, dass auch andere Lasertypen, beispielsweise ein Nd:YVO₄-Laser, zur Erzeugung des IR-Laserstrahls 18 verwendet werden können. Beim Nd:YVO₄-Laser liegt die Laserwellenlänge bei 1064 nm und die in der Frequenzkonversionseinrichtung 17 erzeugte dritte Harmonische bei ca. 355 nm.

Ein Spot-Diagramm des mittels der in Fig. 9 gezeigten Vorrichtung 11 erhaltenen Fernfeldes des austretenden kollimierten Laserstrahls 5 ist in **Fig. 10** dargestellt, wobei die Eingangsstrahleigenschaften und die Pupille identisch zu Fig. 3, Fig. 5 und Fig. 6 gewählt wurden und lediglich die Skala **S₃** auf 100 µrad verkleinert wurde. Wie in Fig. 10 deutlich zu erkennen ist, liegen die Spots in dem gezeigten Beispiel weit innerhalb der Airy-Scheibe 9, d.h. der RMS-Radius der Strahlverteilung ist deutlich geringer als der Airy-Radius (ca. 42 µrad), so dass die in Fig. 9 gezeigte Optik für den Laserstrahl 4, 5 bzw. für die aufweitende Abbildung beugungsbegrenzt ist. Dies trifft aber nicht nur für einen Einfall des Laserstrahls 4 in Richtung der Strahlachse (X-Richtung) zu, wie er in Fig. 10 links oben gezeigt ist, sondern auch für die in Fig. 10 rechts oben sowie links unten und rechts unten dargestellten Spot-Diagramme, in denen der Feldwinkel in verschiedene Raumrichtungen um ca. 0,2° verändert wurde, wobei die Eingangsapertur bei der Simulation 150 mm vor dem ersten Faltungsspiegel 7 angeordnet wurde. Auch bei nicht axialem Einfall des Laserstrahls 4 kann somit mit Hilfe der Vorrichtung 11 eine beugungsbegrenzte Abbildung erreicht werden.

Zusammenfassend kann mit Hilfe der oben beschriebenen Vorrichtungen 11, 13 eine Aufweitung des Laserstrahls 4 bei gleichzeitiger Vermeidung der Degradation der verwendeten Optiken 3, 7, 8 durch intensive Laserbestrahlung erreicht werden, wobei durch eine gegenseitige Kompensation der Abbildungsfehler der einzelnen optischen Elemente 3, 7, 8 insgesamt die Abbildungsfehler klein gehalten und so eine beugungsbegrenzte Abbildung erhalten werden kann.

## Patentansprüche

1. Vorrichtung (11, 13) zur Aufweitung eines Laserstrahls, insbesondere eines UV-Laserstrahls (4), umfassend:
eine Teleskopanordnung (6) mit zwei sphärischen Faltungsspiegeln (7, 8) zur Aufweitung des einfallenden Laserstrahls (4), sowie
eine im divergenten Strahlengang nach der Teleskopanordnung (7, 8) angeordnete Linse (3) mit einer sphärischen Linsenfläche (3a) zur Kollimation des aufgeweiteten Laserstrahls (5), wobei, der im Strahlengang erste Faltungsspiegel ein konvex gekrümmter sphärischer Faltungsspiegel (7) zur Aufweitung des einfallenden kollimierten Laserstrahls (4) ist,
und der im Strahlengang zweite Faltungsspiegel ein konkav gekrümmter sphärischer Faltungsspiegel (8) ist.

2. Vorrichtung nach Anspruch 1, weiter umfassend: eine Verschiebeeinrichtung (12) zur Verschiebung der Linse (3) in Strahlrichtung (X, Y) des kollimierten Laserstrahls (5).

3. Vorrichtung nach einem der Ansprüche 1 oder 2, bei welcher die Linse eine Plankonvexlinse (3) ist, deren konvexe sphärische Linsenfläche (3a) der Teleskopanordnung (6) abgewandt ist.

4. Vorrichtung nach einem der vorhergehenden Ansprüche, bei der eine Strahlrichtung (X) des in die Teleskopanordnung (6) eintretenden Laserstrahls (4) und eine Strahlrichtung (X) des aus der Teleskopanordnung (6) austretenden Laserstrahls (5) parallel zueinander verlaufen.

5. Vorrichtung nach einem der Ansprüche 1 bis 3, bei welcher sich der Strahlengang des in die Teleskopanordnung (6) eintretenden Laserstrahls (4) mit dem Strahlengang des aus der Teleskopanordnung (6) austretenden Laserstrahls (5) überschneidet.

6. Vorrichtung nach einem der vorhergehenden Ansprüche, weiter umfassend: eine Frequenzkonversionseinrichtung (17) zur Frequenzkonversion des Laserstrahls (18) von einer Wellenlänge im IR-Bereich in eine Wellenlänge im UV-Bereich.

7. Vorrichtung nach einem der vorhergehenden Ansprüche, weiter umfassend: einen Laser (19) zur Erzeugung des Laserstrahls (18), insbesondere mit einer Wellenlänge im IR-Bereich.

8. Vorrichtung nach einem der vorhergehenden Ansprüche, weiter umfassend: eine Verkippungseinrichtung (16) zur Verkippung der Linse (3) relativ zur Strahlrichtung (X, Y) des aufgeweiteten, divergenten Laserstrahls.

9. Verfahren zum Aufweiten eines Laserstrahls, insbesondere eines UV-Laserstrahls (4) mittels einer Teleskopanordnung (6) mit zwei sphärischen Faltungsspiegeln (7, 8), wobei der im Strahlengang erste Faltungsspiegel ein konvex gekrümmter sphärischer Faltungsspiegel (7) ist und wobei der im Strahlengang zweite Faltungsspiegel ein konkav gekrümmter sphärischer Faltungsspiegel (8) ist, das Verfahren umfassend:
Aufweiten eines einfallenden kollimierten Laserstrahls (4) an dem im Strahlengang ersten Faltungsspiegel (7), sowie
Kollimieren des aufgeweiteten Laserstrahls an dem im Strahlengang zweiten Faltungsspiegel (8) sowie an einer im divergenten Strahlengang nach der Teleskopanordnung (7, 8) angeordneten Linse (3), welche eine sphärische Linsenfläche (3a) aufweist.

## Claims

1. Device (11, 13) for expanding a laser beam, in particular a UV laser beam (4), comprising:
a telescope arrangement (6) having two spherical folding mirrors (7, 8) for expanding the incident laser beam (4) and a lens (3) which is arranged in the divergent beam path downstream of the telescope arrangement (7, 8) and which has a spherical lens face (3a) for collimating the expanded laser beam (5), wherein
the first folding mirror in the beam path being a convex-curved spherical folding mirror (7) for expanding the incident collimated laser beam (4) and the second folding mirror in the beam path being a concave-curved spherical folding mirror (8).

2. Device according to claim 1, further comprising: a displacement device (12) for displacing the lens (3) in the beam direction (X, Y) of the collimated laser beam (5).

3. Device according to either claim 1 or claim 2, wherein the lens is a planar convex lens (3) whose convex spherical lens face (3a) faces away from the telescope arrangement (6).

4. Device according to any one of the preceding claims, wherein a beam direction (X) of the laser beam (4) entering the telescope arrangement (6) and a beam direction (X) of the laser beam (5) output from the telescope arrangement (6) extend parallel with each other.

5. Device according to any one of the claims 1 to 3, wherein the beam path of the laser beam (4) entering the telescope arrangement (6) intersects with the beam path of the laser beam (5) output from the telescope arrangement (6).

6. Device according to any one of the preceding claims, further comprising: a frequency conversion device (17) for converting the frequency of the laser beam (18) from a wavelength in the IR range to a wavelength in the UV range.

7. Device according to any one of the preceding claims, further comprising: a laser (19) for producing the laser beam (18), in particular having a wavelength in the IR range.

8. Device according to any one of the preceding claims, further comprising: a tilting device (16) for tilting the lens (3) relative to the beam direction (X, Y) of the expanded divergent laser beam.

9. Method for expanding a laser beam, in particular a UV laser beam (4), by means of a telescope arrangement (6) having two spherical folding mirrors (7, 8), the first folding mirror in the beam path being a convex-curved spherical folding mirror (7) and the second folding mirror in the beam path being a concave-curved spherical folding mirror (8), the method comprising:
expanding an incident collimated laser beam (4) at the first folding mirror (7) in the beam path, and
collimating the expanded laser beam at the second folding mirror (8) in the beam path and at a lens (3) which is arranged in the divergent beam path downstream of the telescope arrangement (7, 8) and which has a spherical lens face (3a).

## Revendications

1. Dispositif (11, 13) pour élargir un faisceau laser, en particulier un faisceau laser UV (4), comprenant :
un agencement télescopique (6) comportant deux miroirs de pliage sphériques (7, 8) pour élargir le faisceau laser incident (4) et
une lentille (3) disposée dans le trajet optique divergent après l'agencement télescopique (7, 8) et comportant une surface de lentille sphérique (3a) pour collimater le faisceau laser élargi (5),
dans lequel le premier miroir de pliage dans le trajet optique est un miroir de pliage sphérique à courbure convexe (7) pour élargir le faisceau laser collimaté incident (4) et le deuxième miroir de pliage dans le trajet optique est un miroir de pliage sphérique à courbure concave (8).

2. Dispositif selon la revendication 1, comprenant en outre : un moyen de déplacement (12) pour déplacer la lentille (3) dans la direction de faisceau (X, Y) du faisceau laser collimaté (5).

3. Dispositif selon l'une des revendications 1 ou 2, dans lequel la lentille est une lentille plan-convexe (3) dont la surface de lentille sphérique convexe (3a) est opposée à l'agencement télescopique (6).

4. Dispositif selon l'une des revendications précédentes, dans lequel une direction de faisceau (X) du faisceau laser (4) entrant dans l'agencement télescopique (6) et une direction de faisceau (X) du faisceau laser (5) sortant de l'agencement télescopique (6) sont parallèles entre elles.

5. Dispositif selon l'une des revendications 1 à 3, dans lequel le trajet optique du faisceau laser (4) entrant dans l'agencement télescopique (6) chevauche le trajet optique du faisceau laser (5) sortant de l'agencement télescopique (6).

6. Dispositif selon l'une des revendications précédentes, comprenant en outre : un moyen de conversion de fréquence (17) pour convertir en fréquence le faisceau laser (18) d'une longueur d'onde dans le domaine IR en une longueur d'onde dans le domaine UV.

7. Dispositif selon l'une des revendications précédentes, comprenant en outre : un laser (19) pour générer le faisceau laser (18), en particulier avec une longueur d'onde dans le domaine IR.

8. Dispositif selon l'une des revendications précédentes, comprenant en outre : un moyen d'inclinaison (16) pour incliner la lentille (3) par rapport à la direction de faisceau (X, Y) du faisceau laser divergent élargi.

9. Procédé pour élargir un faisceau laser, en particulier un faisceau laser UV (4), au moyen d'un agencement télescopique (6) comportant deux miroirs de pliage sphériques (7, 8), le premier miroir de pliage dans le trajet optique étant un miroir de pliage sphérique à courbure convexe (7) et le deuxième miroir de pliage dans le trajet optique étant un miroir de pliage sphérique à courbure concave (8), le procédé consistant à :
élargir un faisceau laser collimaté incident (4) sur le premier miroir de pliage (7) dans le trajet optique et
collimater le faisceau laser élargi sur le deuxième miroir de pliage (8) dans le trajet optique et sur une lentille (3) qui est disposée dans le trajet optique divergent après l'agencement télescopique (7, 8) et qui présente une surface de lentille sphérique (3a).
